(19) Europäisches Patentamt
European Patent Office
Office européen des brevets

(11) **EP 4 047 360 B1**

(12) **EUROPEAN PATENT SPECIFICATION**

(45) Date of publication and mention
of the grant of the patent:
**12.02.2025 Bulletin 2025/07**

(21) Application number: **20901834.0**

(22) Date of filing: **15.12.2020**

(51) International Patent Classification (IPC):
***G01N 27/87*** *(2006.01)*

(52) Cooperative Patent Classification (CPC):
**G01N 27/87**

(86) International application number:
**PCT/JP2020/046813**

(87) International publication number:
**WO 2021/125187 (24.06.2021 Gazette 2021/25)**

(54) **MAGNETIC LEAKAGE INSPECTION DEVICE AND DEFECT INSPECTION METHOD**

VORRICHTUNG UND VERFAHREN ZUR MAGNETISCHEN LECKPRÜFUNG

DISPOSITIF MAGNÉTIQUE D'INSPECTION DE FUITE ET PROCÉDÉ D'INSPECTION DE DÉFAUT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.12.2019 JP 2019230183**

(43) Date of publication of application:
**24.08.2022 Bulletin 2022/34**

(73) Proprietor: **JFE Steel Corporation
Tokyo 100-0011 (JP)**

(72) Inventors:
• **YOKOTA, Hiroyuki**
**Tokyo 100-0011 (JP)**
• **YAMAGUCHI, Makoto**
**Tokyo 100-0011 (JP)**

(74) Representative: **Haseltine Lake Kempner LLP
Bürkleinstrasse 10
80538 München (DE)**

(56) References cited:
**CN-A- 103 543 198      JP-A- 2011 007 570
JP-A- H09 304 345      JP-A- S5 661 645**

• **No further relevant documents disclosed**

## Description

Technical Field

The present invention relates to a magnetic leakage inspection device and a defect inspection method that detect a magnetic flux leakage to detect, for example, defects when a magnetic flux passes through the interior of an object to be inspected (inspection object).

Background Art

A magnetic leakage inspection device which uses a change in a magnetic flux leakage is known (see, for example, Patent Literature 1) as a device in a manufacture line of a soft magnetic steel sheet (strip) such as a tin steel sheet for a beverage can or a steel sheet for an automobile, for inspecting, on-line and in a non-destructive manner, a defect that exists on a surface or in an inside of the steel sheet. When a substance other than a soft magnetic material is contained in a steel sheet and exists as a defect, the defect hinders the flow of the magnetic flux passing through the steel sheet in a magnetic saturation state, to cause a magnetic flux leakage from a surface of the steel sheet. Thereby, the technique can detect the magnetic flux leakage to determine a defect. The inspection object steel sheet is a steel sheet (strip) having a thickness of approximately 0.2 mm for a beverage can, or a steel sheet (strip) having a thickness of approximately 0.8 mm for an automobile steel sheet.

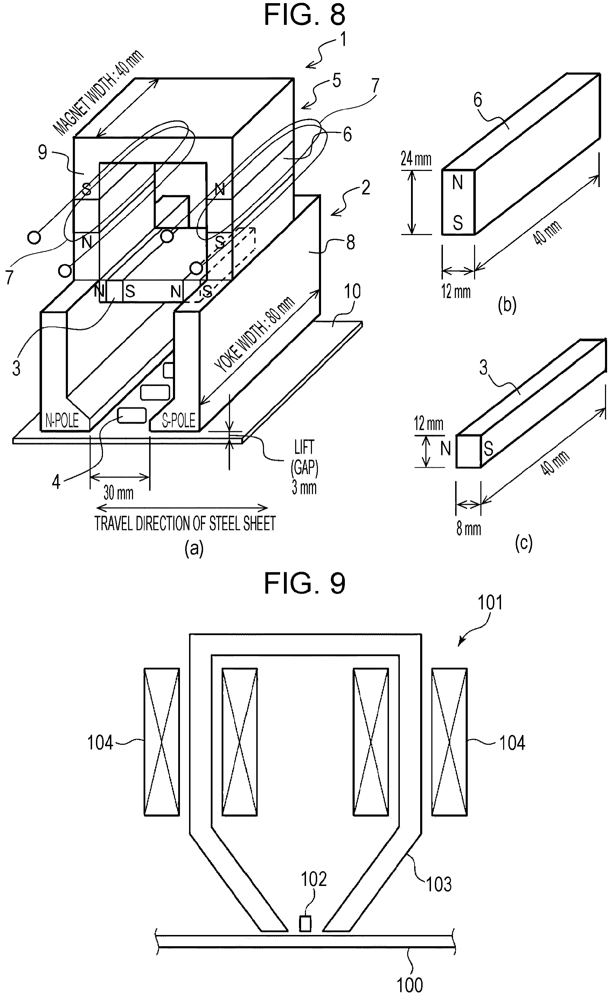

As illustrated in Fig. 9, the magnetic leakage inspection device includes an exciter 101 for generating a magnetic flux leakage and excites a steel sheet 100 that is transported, and a plurality of magnetic detectors 102 for detecting the magnetic flux leakage. The magnetic detectors 102 are arranged in a sheet width direction. The exciter 101 is typically an electromagnet that includes, as illustrated, an iron core (yoke) 103 and a coil 104 wound therearound. For example, coil elements or Hall elements are used as the magnetic detectors 102 (see, for example, Patent Literature 2).

In the case of the electromagnet type that uses an electromagnet as the exciter, a direct-current magnetic field is generated by passing a direct current through the coil. The strength of the magnet can be adjusted to a predetermined value by varying the number of coil turns and the current value of the coil. During inspection, the supply of current continues by using an external power supply. The magnetic flux can be turned off by shutting off the current flowing through the coil. The number of coil turns varies depending on the diameter of the core wire used in the coil. For a core wire of $\phi$ 1.6 mm, the number of coil turns is about 2500 to 3500.

Strong magnets have been produced in recent years. A technique has been known in which a strong magnetic flux required for defect detection is applied to a steel sheet by a permanent magnet (see, for example, Patent Literature 3). The permanent magnet type is advantageous in that an inspection object can be magnetized without using an external power supply.

The permanent magnet type is inconvenient in that unlike an electromagnet, the magnetic flux cannot be turned off and it is difficult to shut off the application of excitation force to the inspection object. As a solution to this, a technique has been proposed in which a permanent magnet and an electromagnet are combined so that the magnetizing performance of a magnetizer (exciter) is variable (see, for example, Patent Literature 4).

Citation List

Patent Literature

PTL 1: Japanese Unexamined Patent Application Publication No. 56-61645
PTL 2: Japanese Unexamined Patent Application Publication No. 2002-195984
PTL 3: Japanese Unexamined Patent Application Publication No. 2002-156363
PTL 4: Japanese Unexamined Patent Application Publication No. 2011-7570

Summary of Invention

Technical Problem

An exciter of electromagnet type requires a large coil to obtain a sufficient magnetic flux leakage from a defect in a steel sheet (inspection object). This requires a long iron core and results in an increased weight. For defect inspection, the distance between the end of the yoke and the steel sheet to be inspected needs to be in the range of about 0.5 mm to 7 mm. In this case, when a weld of the steel sheet passes through the inspection device, the exciter needs to be moved away from the steel sheet. However, if the inspection device is heavy in weight, it takes a relatively long time to move, for example, a weld away and this increases the length of an uninspected region near a welding point. Also, to enable the exciter to serve as a magnet, a large amount of energy is required and this increases the amount of heat generation.

The exciter of permanent magnet type has a lighter weight than the exciter of electromagnet type, requires no energy to serve as a magnet, and is free from the problem of heat generation. However, since the magnetic flux cannot be turned off as described above, it is difficult to shut off the application of excitation force to the inspection object for the purposes of maintenance checks or cleaning for removing, for example, iron powder or dust that adheres to the inspection device during inspection.

Cleaning and maintenance checks can be carried out, for example, by moving the exciter away from the inspection object to prevent the inspection object from being subjected to the excitation force of the exciter. However, moving the exciter away from the inspection object requires a large mechanical external force and thus requires a large attaching and detaching device. To turn off the excitation force of the permanent magnet, for example, the gap between the iron core (yoke) and the inspection object may be widened, or the north pole (N-pole) and the south pole (S-pole) of the permanent magnet may be short-circuited by the iron core. In either case, however, turning off the excitation force of the permanent magnet requires an additional mechanism or structure.

In the technique disclosed in Patent Literature 4, the magnetization made by the permanent magnet can be weakened by the electromagnet to adjust the excitation force. Therefore, cleaning and maintenance checks can be carried out by reducing the excitation force applied to the object to be inspected. To keep the reduced state of the excitation force, however, it is necessary to continuously apply a current to the electromagnet. This results in excessive energy consumption and causes safety problems in the work process.

Accordingly, an object of the present invention is to provide a magnetic leakage inspection device and a defect inspection method that can reduce the size and weight of the exciter, cause no energy loss resulting from heat generation, and can easily turn off the excitation and maintain the excitation-off state without using excessive energy.

Solution to Problem

To solve the problems described above, the present invention is defined by independent claims 1 and 5. (1) to (6)repeat the wording of claims 1-6:

(1) A magnetic leakage inspection device that inspects an inspection object by exciting the inspection object and detecting a magnetic flux leakage from the inspection object, the magnetic leakage inspection device including a gate-shaped main exciter having an opening at a portion that faces the inspection object, the main exciter including at least one first permanent magnet; a magnetic detector disposed in the opening in the main exciter; a sub-exciter connected to the main exciter to interpose the at least one first permanent magnet of the main exciter, the sub-exciter including a second permanent magnet configured to magnetize the main exciter in the same direction as the first permanent magnet; and an electromagnetic coil configured to be capable of generating a magnetic flux by being supplied with a direct current, varying a magnetization direction of the second permanent magnet, and reversing magnetic poles of the second permanent magnet , wherein the main exciter and the sub-exciter each include a yoke for forming a magnetic path, and the first permanent magnet and the second permanent magnet are interposed in the respective yokes.

(2) The magnetic leakage inspection device according to (1), in which the first permanent magnet is a neodymium magnet.

(3) The magnetic leakage inspection device according to (1) or (2), in which the second permanent magnet is an alnico magnet or a samarium-cobalt magnet.

(4) The magnetic leakage inspection device according to any one of (1) to (3), in which a cross-sectional area of the electromagnetic coil is 200 mm$^2$ to 2000 mm$^2$, the cross-sectional area being calculated from a diameter and the number of turns of a conductive wire forming the electromagnetic coil.

(5) A defect inspection method that inspects a strip for defects by using the magnetic leakage inspection device according to any one of (1) to (4), the strip being conveyed as an inspection object, the defect inspection method including during a defect inspection of the strip, stopping the current passed through the electromagnetic coil to allow a magnetic flux from the first permanent magnet to be supplied from the main exciter to the inspection object; and when the defect inspection is not carried out, supplying a direct current to the electromagnetic coil to produce a magnetic flux, reversing the magnetic poles of the second permanent magnet with the magnetic flux to magnetize the sub-exciter in a direction opposite to the main exciter, and confining the magnetic flux from the first permanent magnet within the sub-exciter.

(6) The defect inspection method according to (5), in which to resume the defect inspection after the defect inspection is stopped, a direct current is supplied to the electromagnetic coil in a direction opposite to a direction when the defect inspection is stopped, the magnetic poles of the second permanent magnet are reversed again to restore the state before the defect inspection is stopped, and the sub-exciter is magnetized in the same direction as the main exciter.

Advantageous Effects of Invention

The main exciter includes a permanent magnet in the present invention. This eliminates the need to prepare an exciting coil and a long iron core, reduces the size and weight of the exciter, eliminates the need to supply a large amount of energy to the exciting coil to enable the exciter to serve as a magnet, and causes no problem of heat generation. Since the electromagnetic coil capable of varying the magnetization direction of the second permanent magnet is provided, the magnetic poles of the second permanent magnet can be reversed by passing a current through the electromagnetic coil for a predetermined period of time. This makes it easy to stop the supply of a magnetic flux from the main exciter to the inspection object. Since the supply of a magnetic flux from the main exciter to the inspection object is kept stopped thereafter even when the supply of current to the electromagnetic coil is turned off, excessive use of energy can be avoided. Since the electromagnetic coil is one that simply reverses the magnetic poles of the second permanent magnet, there is no need to use a large electromagnetic coil that hinders reduction of the size and weight of the exciter.

Brief Description of Drawings

[Fig. 1] Fig. 1 is a vertical cross-sectional view schematically illustrating a configuration of a magnetic leakage inspection device according to an embodiment of the present invention.
[Fig. 2] Fig. 2 is a horizontal cross-sectional view schematically illustrating a configuration of the magnetic leakage inspection device according to the embodiment of the present invention.
[Fig. 3] Fig. 3 is a perspective view schematically illustrating a configuration of the magnetic leakage inspection device according to the embodiment of the present invention.
[Fig. 4] Fig. 4 is a diagram illustrating a magnetic field formed in a main exciter and a sub-exciter during normal operation (or when excitation is on).
[Fig. 5] Fig. 5 is a diagram illustrating a magnetic field formed in the main exciter and the sub-exciter in a non-operating state (or when excitation is off).
[Fig. 6] Fig. 6 is a diagram illustrating a magnetic flux density distribution and a magnetic flux (lines of magnetic force) distribution in an excitation-on state according to Example.
[Fig. 7] Fig. 7 is a diagram illustrating a magnetic flux density distribution and a magnetic flux (lines of magnetic force) distribution in an excitation-off state according to Example.
[Fig. 8] Fig. 8(a) is a diagram illustrating Example of the magnetic leakage inspection device configured as illustrated in Fig. 1, and Fig. 8(b) and Fig. 8(c) are diagrams illustrating a second permanent magnet and a first permanent magnet in the magnetic leakage inspection device illustrated in Fig. 8(a); a cross-sectional view illustrating an example of a conventional magnetic leakage inspection device using an electromagnet.
[Fig. 9] Fig. 9 is a cross-sectional view illustrating an example of a conventional magnetic leakage inspection device using an electromagnet.

Description of Embodiments

Embodiments of the present invention will now be described with reference to the accompanying drawings.

<Magnetic Leakage Inspection Device>

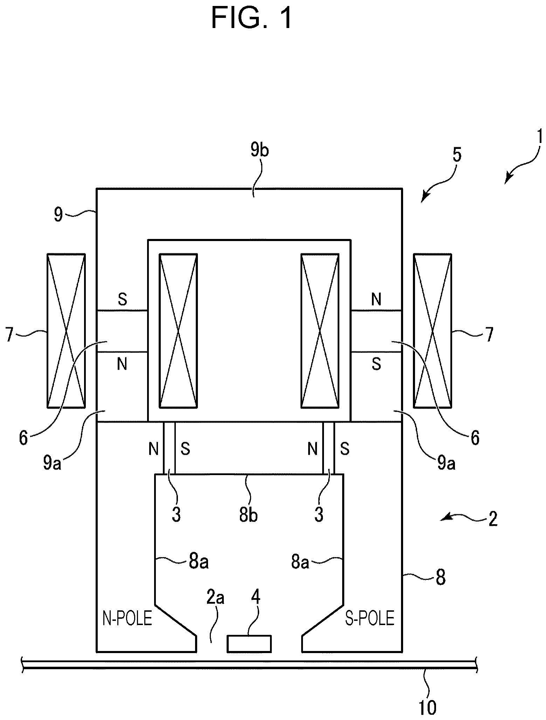

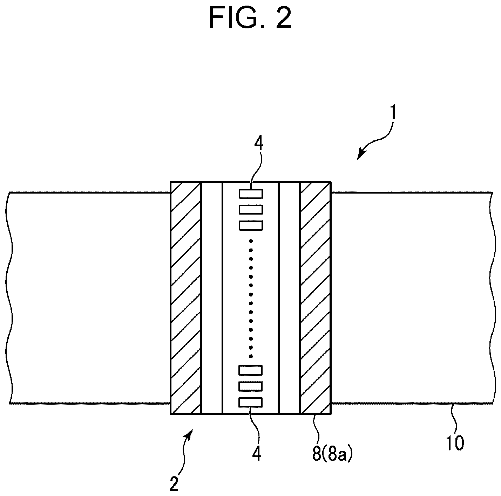

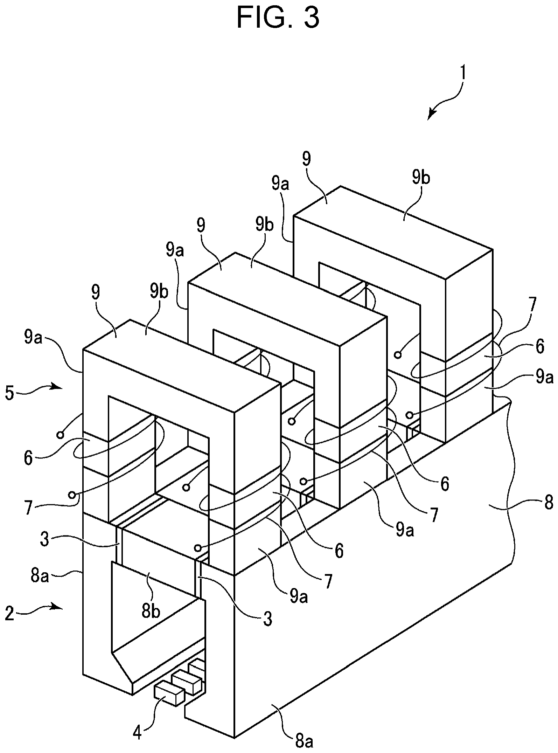

Fig. 1 is a vertical cross-sectional view schematically illustrating a configuration of a magnetic leakage inspection device according to an embodiment of the present invention, Fig. 2 is a horizontal cross-sectional view of Fig. 1, and Fig. 3 is a perspective view of Fig. 1.
As illustrated in Fig. 1, a magnetic leakage inspection device 1 according to an embodiment of the present invention is a device configured to detect defects in a strip (thin steel sheet) 10 which is an object to be inspected (inspection object) and is conveyed. The magnetic leakage inspection device 1 includes a main exciter 2 including at least one first permanent magnet 3, a plurality of magnetic detectors 4, a sub-exciter 5 including a second permanent magnet 6, and an electromagnetic coil 7. The main exciter 2, the sub-exciter 5, and the electromagnetic coil 7 constitute an exciter.

[Main Exciter]

The main exciter 2 is disposed in such a way as to face the strip (thin steel sheet) 10 which is an inspection object and is conveyed. The main exciter 2 is gate-shaped (or U-shaped in cross-section) and has an opening 2a at a portion that faces the strip 10 (inspection object). Here, the term "to face (or facing)" means that, with the toe end portions of legs 8a of a yoke 8 being directed toward the strip 10 to be inspected, the main exciter 2 is disposed substantially perpendicular to the strip 10. The opening 2a is provided with the plurality of magnetic detectors 4. The main exciter 2 includes the first permanent magnet 3 and the yoke 8 for forming a magnetic path. The yoke 8 is magnetized by the first permanent magnet 3. The yoke 8 has a pair of legs 8a and a central portion 8b linearly extending to connect the basal end portions of the legs 8a. The opening 2a is formed between the toe end portions of the legs 8a, and the toe end portions of the legs 8a are disposed close to the strip 10. The toe end portion of one of the legs 8a serves as the north pole (N-pole), and the toe end portion of the other of the legs 8a serves as the south pole (S-pole). The first permanent magnet 3 is interposed in the middle of the central portion 8b of the yoke 8. The first permanent magnet 3 and the yoke 8 form a magnetic circuit with the magnetic detectors 4 interposed therein, and drive the inspected portion of the strip 10 into a state of flux saturation or near flux saturation.
Examples of the strip 10 (inspection object) include a soft magnetic member, such as a tin steel sheet, a tin free steel (TFS), a galvanized steel sheet, or an original sheet of a galvanized steel sheet. The thickness of the strip 10 is preferably in the range of 0.1 mm to 3.2 mm.
A magnet selected as the first permanent magnet 3 is one with a magnetic force that can drive the inspected portion of the strip 10 (inspection object) to flux saturation state. Any permanent magnet, such as a neodymium magnet, a samarium-cobalt magnet, a ferrite magnet, or an alnico magnet, can be used here, but a neodymium magnet having a strong magnetic force is particularly suitable. Although the first permanent magnet 3 may be constituted by one piece, the first permanent magnet 3 may be divided into two and disposed adjacent to the respective legs 8a as illustrated in Fig. 1, or may be divided into three or more and arranged in place. It is preferable in this case that the first permanent magnets 3 be symmetrically arranged in the right and left direction. With the first permanent magnet 3 divided and arranged in two locations, a uniform magnetic flux density can be achieved. The strength of the first permanent magnet 3 can be adjusted by varying its thickness (or length in the lateral direction of the central portion 8b in Fig. 1; note that the "thickness" of the permanent magnet refers to the length in the direction in which the magnetic flux flows).

The yoke 8 may be a soft magnetic body of any type. Practically, it is preferable to use, for example, an SS 400 steel material in consideration of economy. The yoke 8 needs to have a thickness that does not cause resistance to the passage of a necessary magnetic flux ("thickness" of the yoke is a thickness in the direction perpendicular to the direction in which a magnetic flux in the legs 4a and the central portion 8b of the yoke 4 flows in the cross-section illustrated in Fig. 1). In the present embodiment, the yoke 8 is preferably 10 mm to 20 mm thick. If the yoke 8 is made thicker than necessary, an increase in weight will result. The exciter using an electromagnet requires a large coil for exciting the inspection object and requires a long yoke around which to wind the coil. In the present embodiment, where the first permanent magnet 3 is used, the legs 8a of the yoke 8 can be made shorter than that when an electromagnet is used. For example, although the legs 8a of the yoke 8 of electromagnet type need to be about 150 mm to 250 mm long, their length may be about 50 mm to 100 mm in the present embodiment.

The length of the exciter in the depth direction (i.e., length in a direction perpendicular to the drawing of Fig. 1) may be set to any value depending on the size of the inspection object. For example, when the strip 10 is magnetized in the direction of conveyance (magnetized in the L-direction), the length of the exciter in the depth direction is preferably longer than the sheet width of the strip 10 (inspection object). On the other hand, when the strip 10 is magnetized in the sheet width direction (magnetized in the C-direction), the length of the exciter in the depth direction may be about 40 mm to 100 mm.

The size of gap (width of the opening 2a) between the north pole and the south pole at the toe end portions of the legs 8a of the yoke 8 varies depending on the structure of the magnetic detectors 4 arranged between the toe end portions. For magnetization in the L-direction, it is generally preferable that the size of gap described above be 10 mm to 30 mm. When the inspection involves magnetization in the C-direction, the size of gap may be set to be in the range of 40 mm to 600 mm, preferably in the range of 100 mm to 150 mm. When the size of gap increases, a more powerful exciter is required.

[Magnetic Detector]

The magnetic detectors 4 are configured to detect a magnetic flux (lines of magnetic force) leaking from the strip 10 in magnetic saturation state. For example, coil elements or Hall elements may be used as the magnetic detectors 4. When the strip 10 is magnetized in the direction of conveyance (magnetized in the L-direction), the main exciter 2 is greater than or equal to the sheet width of the strip 10 (inspection object) as illustrated in Fig. 2, and the magnetic detectors 4 are arranged, for example, with an interval of 1 mm in the sheet width direction within the range of the sheet width + $\alpha$ (+ $\alpha$ is an allowance for meandering of the strip 10). The allowance $\alpha$ is preferably about 5% to 20% of the sheet width. For example, when the sheet width is 1000 mm and the magnetic detectors 4 are arranged with intervals of 1 mm, "1000 + $\alpha$" magnetic detectors 4 are arranged in the sheet width direction. In this case, the length of the main exciter 2 in the depth direction also needs to be greater than or equal to the sheet width and is greater than or equal to 1000 mm.

[Sub-Exciter]

The sub-exciter 5 is gate-shaped (or U-shaped in cross-section), disposed on one side of the main exciter 2 opposite the strip 10, and connected to the main exciter 2. The sub-exciter 5 may be formed integrally with the main exciter 2. The sub-exciter 5 includes the second permanent magnet 6 and a yoke 9 for forming a magnetic path. The yoke 9 is magnetized by the second permanent magnet 6. The yoke 9 has a pair of legs 9a and a central portion 9b linearly extending to connect the basal end portions of the legs 9a. The toe end portions of the legs 9a are connected to the central portion 8b of the main exciter 2. The legs 9a of the yoke 9 are connected to the main exciter 2, with the two first permanent magnets 3 of the main exciter 2 being interposed between the legs 9a. That is, the legs 9a of the sub-exciter 5 are connected at respective positions outside the two first permanent magnets 3. The second permanent magnet 6 is interposed in the middle of the yoke 9. The second permanent magnet 6, which is provided in each of the legs 9a in the example illustrated in Fig. 1, may be provided in the central portion 9b. When the second permanent magnet 6 is provided in the central portion 9b, the second permanent magnet 6 may be constituted by one piece, or may be divided into two and arranged in place. When the second permanent magnet 6 is divided into two, it is preferable that the resulting second permanent magnets 6 be symmetrically arranged in the right and left direction.

The second permanent magnet 6 used is one that has substantially the same magnetic force as the first permanent magnet 3 of the main exciter 2. Any permanent magnet, such as a neodymium magnet, a samarium-cobalt magnet, a ferrite magnet, or an alnico magnet, can be used as the second permanent magnet 6. It is preferable, however, that the second permanent magnet 6 be a magnet having a lower coercivity than the first permanent magnet 3 and having magnetic poles that are more easily reversed than those of the first permanent magnet 3. For example, an alnico magnet or a samarium-cobalt magnet is suitable for use as the second permanent magnet 6. The magnetic force of the alnico magnet is about a third of that of the neodymium magnet of the same size. Therefore, when a neodymium magnet is used as the first permanent magnet 3 and an alnico magnet is used as the second permanent magnet 6, the alnico magnet is sized to be about three times the neodymium magnet. Since the alnico magnet has a relatively low coercivity, the magnetic poles of the alnico magnet are more easily reversed. Using a samarium-cobalt magnet is advantageous in that the samarium-cobalt magnet is stable under severe inspection conditions, such as a high temperature atmosphere. The second permanent magnet 6 is disposed with the same polarity arrangement as the first permanent magnet 3.

The yoke 9 may also be a soft magnetic body of any type, as in the case of the yoke 8. Practically, it is preferable to use, for example, an SS 400 steel material in consideration of economy. The yoke 9 is configured to have a thickness that does not cause resistance to the passage of a magnetic flux necessary for the sub-exciter 5. As described below, during normal operation, a magnetic flux is supplied from the legs 9a of the yoke 9 to the legs 8a of the yoke 8. Therefore, it is preferable, as illustrated in Fig. 1, that the legs 8a of the yoke 8 be greater in thickness than the legs 9a of the yoke 9.

[Electromagnetic Coil]

The electromagnetic coil 7 is configured to be capable of producing a magnetic flux by being supplied with a direct current, varying the magnetization direction of the second permanent magnet 6, and reversing the magnetic poles of the second permanent magnet. By adjusting the number of turns and the direct current being supplied, the electromagnetic coil 7 can reverse the magnetic poles of the second permanent magnet 6 and inversely polarize the second permanent magnet 6. It is preferable, as illustrated in Fig. 1 and Fig. 3, that the electromagnetic coil 7 be disposed to cover the second permanent magnet 6 of the sub-exciter 5. The electromagnetic coil 7, which is one that simply reverses the magnetic poles of the second permanent magnet, does not need to be a large electromagnetic coil, such as that used in the exciter of electromagnet type (for example, an electromagnetic coil formed by winding a conductive wire with a core wire diameter of 1.6 mm about 2500 to 3500 times around a yoke having 200 mm long legs). The electromagnetic coil 7 may be formed by simply winding a conductive wire of the same core wire diameter, for example, about 500 to 2000 times, or even about 500 to 1000 times. Note that if the electromagnetic coil 7 is one that is constituted by a plurality of coil portions, the number of turns of the electromagnetic coil 7 is the total number of turns of all the coil portions.

It is preferable here that the cross-sectional area S (mm²) of the electromagnetic coil calculated from the core wire diameter D (mm) of the conductive wire forming the electromagnetic coil and the number of turns N be 200 mm² to 2000 mm². The cross-sectional area S is expressed by the following equation:

$$S = \pi \cdot (D/2)^2 \cdot N.$$

If the cross-sectional area S is less than 200 mm², it may be difficult to reverse the magnetic poles of the second permanent magnet under such a condition as about 2 A, which is a normal exciting current. On the other hand, if the cross-sectional area S exceeds 2000 mm², a large weight of the electromagnet of the sub-exciter leads to an increased weight of the entire magnetic leakage inspection device 1. Accordingly, when the cross-sectional area S is within the range described above, it is possible both to provide the function of the sub-exciter and to reduce the weight of the device according to the present embodiment. Note that when the conductive wire of the electromagnetic coil has a small core wire diameter, the weight of the entire device does not increase even if the number of coil turns increases.

[Positional Relation between Main Exciter and Sub-Exciter]

As illustrated in Fig. 3, for magnetization in the L-direction, the legs 8a of the yoke 8 of the main exciter 2 each extend integrally in the width direction of the strip 10, whereas the central portion 8b of the yoke 8 of the main exciter 2 and the sub-exciter 5 may be divided into a plurality of parts and arranged at intervals in the width direction of the strip 10. This facilitates wiring and mounting of the electromagnetic coil 7. In this case, the thicknesses of the first permanent magnet 3 and the second permanent magnet 6 are determined in such a way as to compensate for magnetic force in missing parts of the central portion 8b of the yoke 8 and the sub-exciter 5.

[Magnetic Flux Density and Others]

The inspected portion of the strip 10 is excited and driven to flux saturation state mainly by a direct-current magnetic field of the first permanent magnet 3 of the main exciter 2. During operation, where the direction of the magnetic field of the sub-exciter 5 is the same as the direction of the magnetic field of the main exciter 2, the sub-exciter 5 also contributes to excitation of the strip 10. To drive the inspected portion of the strip 10 into a state of flux saturation or near flux saturation, the magnetic flux density in the interior of the strip 10 (inspection object) is set to about 1.7 tesla or more by the direct-current magnetic field of the first permanent magnet 3 and the second permanent magnet 6. As a gap with respect to the strip 10 increases, the magnetic flux in the strip 10 decreases. The first permanent magnet 3 is selected in such a way that even in this case, the magnetic flux in the strip has at least 1.7 tesla. Although the gap between the strip 10 and the toe end portions of the legs 8a varies depending on the device configuration, the gap is set to a value in the range of about 0.1 mm to 7 mm. The gap is preferably 0.5 mm to 3 mm.

<Inspection Method with Magnetic Leakage Inspection Device>

An inspection method performed in a magnetic leakage inspection device configured as described above will now be described.

[Normal Operation (Excitation On)]

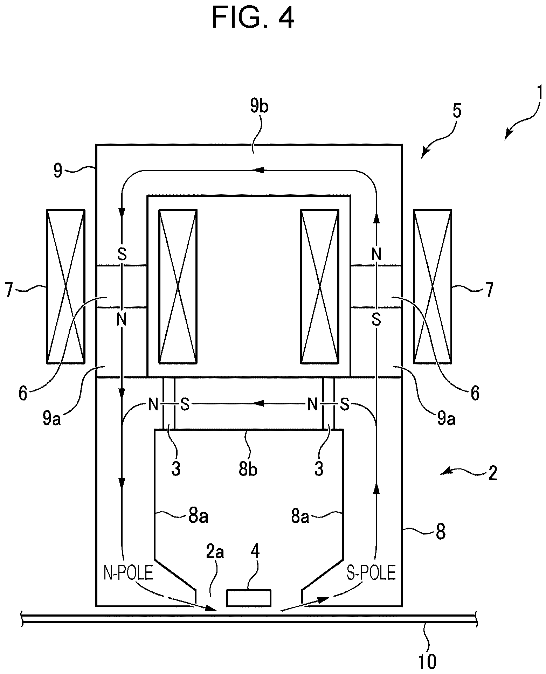

In normal operation, when supply of current to the electromagnetic coil 7 is off, the magnetic leakage inspection device 1 operates, as illustrated in Fig. 1, with the first permanent magnet 3 of the main exciter 2 and the second permanent magnet 6 of the sub-exciter 5 in the same polarity state. Thus, as illustrated in Fig. 4, a magnetic field is formed in the yoke 8 to allow a magnetic flux to flow from the toe end portion on the south pole side toward the toe end portion on the north pole side in the main exciter 2, and a magnetic field is also formed in the yoke 9 of the sub-exciter 5 to allow a magnetic flux to flow in the same direction. The inspection portion of the strip 10 (inspection object) is thus excited by the magnetic flux emitted from the toe end portion of the main exciter 2 into space and the magnetic flux density in the excited portion can be increased to 1.7 tesla or more, which is magnetic flux density in the state of flux saturation or near flux saturation.

[Non-Operation (Excitation Off)]

To turn off excitation of the strip 10 (inspection object) by stopping the operation of the inspection device, for example, for cleaning and maintenance checks, the magnetic poles of the second permanent magnet 6 are reversed by passing a direct current through the electromagnetic coil 7 in the direction of reversing the magnetic poles of the second permanent magnet 6, increasing the current to a value at which the magnetic flux produced by the electromagnetic coil 7 can reverse the magnetic poles, and supplying the current of this value until the time when the magnetic poles are reversed. By thus reversing the magnetic poles, the second permanent magnet can be polarized in the reverse direction (inversely polarized). When a current at which the magnetic force of the second permanent magnet 6 matches the magnetic force of the electromagnetic coil 7 is defined as a reference current, it is preferable to apply a current (direct current) that is two to three times the reference current, for example, for 1 second to 30 seconds for stability. It is more preferable that the current be applied for 1 second to 10 seconds. The magnetic poles can be sufficiently reversed in a relatively short time and this can reduce the amount of heat generation of the coil.

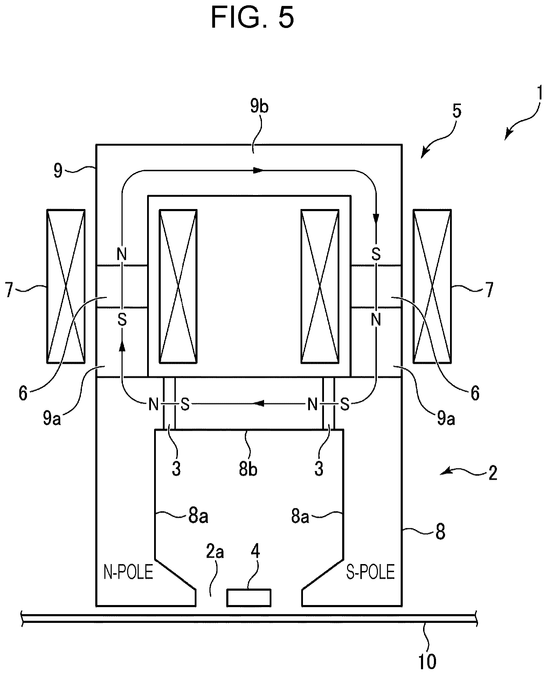

By thus reversing the magnetic poles of the second permanent magnet 6, the sub-exciter 5 is magnetized, as illustrated in Fig. 5, in the direction opposite that during the normal operation. A magnetic field is formed in such a way that the magnetic flux from the first permanent magnet 3 is drawn to the yoke 9 of the sub-exciter 5, and the magnetic flux from the first permanent magnet 3 can be confined within the sub-exciter 5. That is, the magnetic flux from the first permanent magnet 3 is supplied to the sub-exciter 5 and very little magnetic flux is supplied to the legs 8a of the yoke 8 of the main exciter 2. An excitation-off state is thus created, in which very little magnetic flux is released from the toe end portions of the legs 8a of the main exciter 2 into space, or toward the strip 10 to be inspected, and only a weak magnetic flux is released.

To return to the normal operation state (excitation-on state) from the excitation-off state, a current of the same magnitude as that for transition to the excitation-off state is supplied to the electromagnetic coil 7 in the opposite direction, so as to restore the direction of the magnetic poles of the second permanent magnet 6. As in the case of transition to the excitation-off state, for example, the current is passed through the electromagnetic coil 7 for 1 second to 30 seconds.

<Defect Inspection Method>

A defect inspection method according to the present embodiment is a defect inspection method that inspects the strip 10 conveyed as an inspection object for defects, by using the magnetic leakage inspection device 1 described above. During a defect inspection of the strip 10, a current flowing through the electromagnetic coil 7 is stopped to allow a magnetic flux from the first permanent magnet 3 to be supplied from the main exciter 2 to the strip 10 (inspection object). When the defect inspection is not carried out, a direct current is supplied to the electromagnetic coil 7 to produce a magnetic flux, the magnetic poles of the second permanent magnet 6 are reversed by the magnetic flux to magnetize the sub-exciter 5 in the direction opposite the main exciter 2, and a magnetic flux from the first permanent magnet 3 is confined within the sub-exciter 5.

To resume the defect inspection after it is stopped, a direct current is supplied to the electromagnetic coil 7 in the direction opposite that when the defect inspection is stopped, the magnetic poles of the second permanent magnet 6 are reversed again to restore the state during the defect inspection, and the sub-exciter 5 is magnetized in the same direction as the main exciter 2.

<Effects of Embodiments>

In the magnetic leakage inspection device 1 according to the present embodiment, the main exciter 2 includes the first permanent magnet 3 as described above. This eliminates the need to prepare an exciting coil and a long iron core. Although the magnetic leakage inspection device 1 includes the sub-exciter, it is still possible to make the size and weight of the entire exciter smaller than those of the conventional electromagnet type. For example, the length of the yoke 8 of the main exciter 2 according to the present embodiment can be shorter than that of the conventional electromagnet type, and the total weight of the conductive wire of the coil used in the sub-exciter 5 can be about half that of the conventional electromagnet type. The weight of the magnetic leakage inspection device can thus be reduced by 50% or more. Also, unlike the electromagnet type, there is no need to continuously supply a large amount of energy to the exciting coil and there is no problem of heat generation.

Since the exciter can be reduced in size, the device can be installed easily. Also, since the weight of the entire exciter can be reduced, even when the strip 10 (inspection object) has a protruding stepped portion, such as a weld, the exciter can be quickly moved away from, and returned to, the original position when the weld passes through the exciter. This can reduce an uninspected time period and narrow the uninspected regions before and after the weld. Also, since there is no problem of heat generation of the coil, it is possible to significantly reduce troubles, such as temperature imbalance in the magnetic detector (e.g., sensitivity variation, zero-point drift, and detector deterioration), that occur as a result of heat generation of the coil in the conventional exciter of electromagnet type. Also, since a large exciting coil is not required, there is no need to prepare a large direct-current power supply for supplying a direct current.

Since the electromagnetic coil 7 capable of varying the magnetization direction of the second permanent magnet 6 is provided, the magnetic poles of the second permanent magnet 6 can be reversed and the second permanent magnet 6 can be inversely polarized by passing a current through the electromagnetic coil 7 for a predetermined period of time. This makes it easy to turn off the excitation of the main exciter 2. Since the excitation of the main exciter 2 is kept stopped thereafter even when the current is turned off, excessive use of energy can be avoided.

When the excitation of the main exciter 2 is kept stopped, the main body of the inspection device can be easily moved to the maintenance position. The inspection device can be easily cleaned even if, for example, iron powder adheres thereto, and has good serviceability and durability.

Since excitation of the main exciter 2 can be turned on and off by passing a current through the electromagnetic coil 7, the operation can be carried out remotely by an electric circuit.

<Other Applications>

Embodiments of the present invention described above are merely for illustrative purposes and are not meant to be limiting. The embodiments described above may be omitted, replaced, or changed in various forms without departing from the scope of the present invention.

For example, the inspection object is not limited to a strip and the present invention is applicable to any thin soft magnetic body. Also, the main exciter and the sub-exciter do not necessarily need to be configured as illustrated in Fig. 1 to Fig. 3.

Example 1

In Example 1, a neodymium magnet was used as the first permanent magnet, an alnico magnet was used as the second permanent magnet, a steel material (SS 400) was used as the yokes to form the main exciter and the sub-exciter, and the electromagnetic coil and the magnetic detectors were mounted to make the magnetic leakage inspection device illustrated in Fig. 1.

<Excitation-On State>

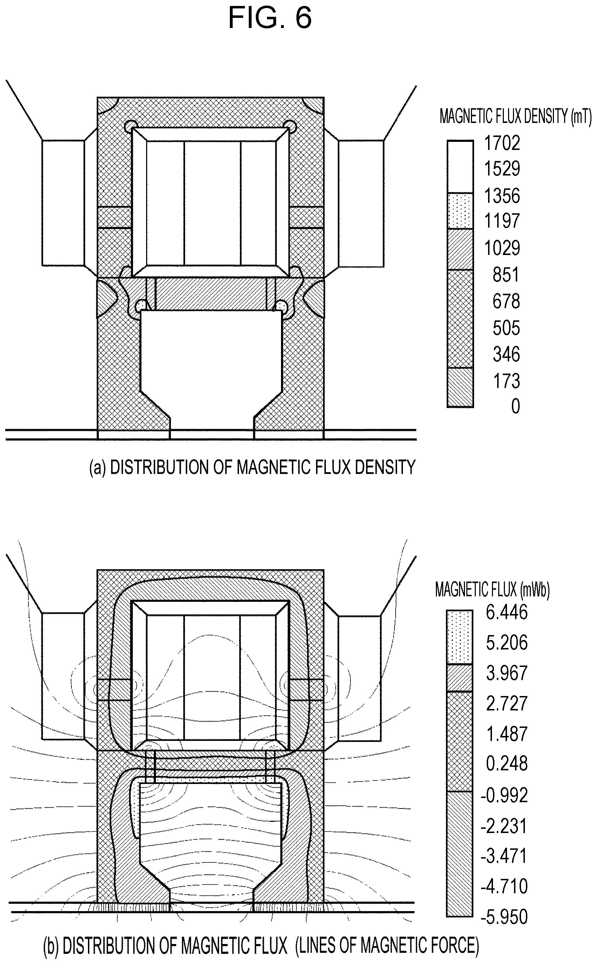

First, the supply of current to the electromagnetic coil was stopped to bring the magnetic leakage inspection device into an excitation-on state, where the magnetic poles of the second permanent magnet (alnico magnet) of the sub-exciter were directed as illustrated in Fig. 4. Fig. 6 shows the corresponding magnetic flux density distribution and magnetic flux (lines of magnetic force) distribution. Note that although the magnetic flux density is highest at the inspected portion of the inspection object, the portion does not appear in the drawing, as it is very small in size.

Although Fig. 6 is a monochrome version of a color illustration, it is still possible to understand from Fig. 6 that there is a large amount of magnetic flux in the main exciter, the magnetic flux (lines of magnetic force) leaks from the yoke of the main exciter to the outside, and a large proportion of the magnetic flux (lines of magnetic force) leaking to the outside is directed toward the inspection object.

<Excitation-Off State>

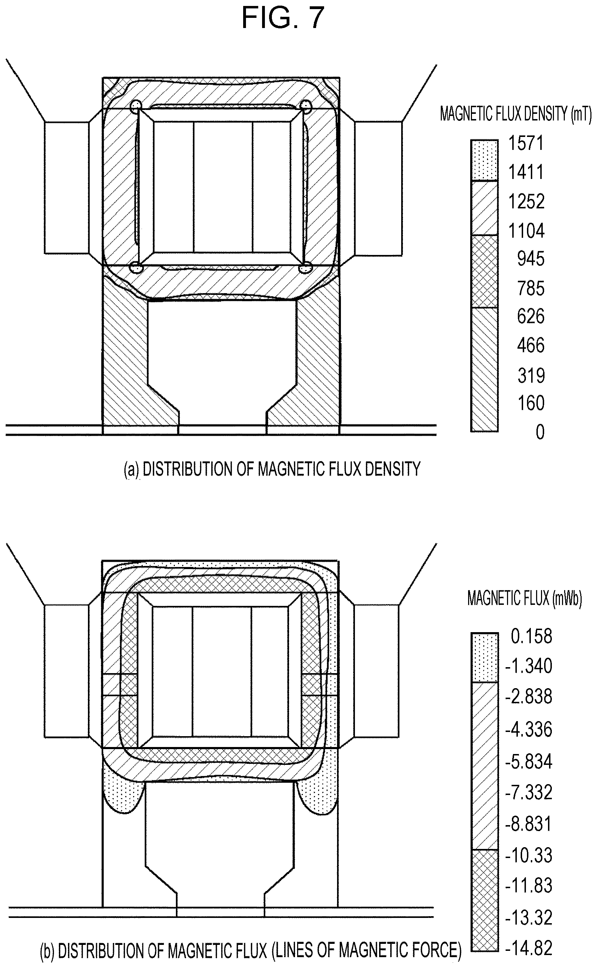

Next, the magnetic leakage inspection device was brought into an excitation-off state. The excitation-off state was created by passing a direct current through the electromagnetic coil so that the magnetic poles of the second permanent magnet were reversed by the magnetic flux produced by the electromagnetic coil. Specifically, the magnetic poles of the second permanent magnet were reversed and the second permanent magnet was inversely polarized by passing a direct current through the electromagnetic coil in the direction of reversing the magnetic poles of the second permanent magnet, increasing the current, and passing the current that was three times a reference current for nine seconds. Note that the reference current is defined as a current at which the magnetic force of the second permanent magnet matches the magnetic force of the electromagnetic coil. Fig. 7 shows the corresponding magnetic flux density distribution and magnetic flux (lines of magnetic force) distribution.

Although Fig. 7 is a monochrome version of a color illustration as in the case of Fig. 6, it is still possible to understand from Fig. 7 that by reversing the magnetic poles of the second permanent magnet, substantially the entire magnetic flux from the main exciter is drawn to the sub-exciter and the flow of magnetic flux to the inspection object is suppressed. It was also found that the magnetic flux density in the yoke of the sub-exciter was equivalent to 1.2 T and that the magnetic flux in the main exciter was substantially entirely drawn to the yoke of the sub-exciter. Also, it was found that the sub-exciter (second permanent magnet) was inversely polarized.

Example 2

Example 2 using the magnetic leakage inspection device structured as illustrated in Fig. 1 will now be described. As illustrated in Fig. 8(a), the present example is a magnetic leakage inspection device in which the opening between the yoke legs of the main exciter has a size L of 30 mm and the yoke width (or length of the yoke 8a of the main exciter in the depth direction illustrated in Fig. 1) is 80 mm. The permanent magnet 3 of the main exciter 2 is a neodymium magnet and two magnets that are 8 mm thick, 12 mm wide, and 40 mm deep, as illustrated in Fig. 8(c), are interposed in the middle of the central portion 8b of the yoke 8. The width (depth) of the central portion 8b of the yoke of the main exciter 2 is narrower than the width of the legs 8a (yoke width). The central portion 8b is disposed substantially in the center along the yoke width. Since the neodymium magnet used in the main exciter 2 has a strong magnetic force, a sufficient amount of magnetic flux can be supplied across the yoke width at the toe end portion of the yoke.

The yoke 8 of the main exciter was 60 mm high. Since there is no need to install an electromagnet in the main exciter, the yoke legs can be made shorter in length and thinner in thickness.

The sub-exciter 5 is disposed on one side of the main exciter 2 opposite the strip 10 and connected to the main exciter 2. The sub-exciter 5 includes the second permanent magnet 6 interposed in each leg 9a of the yoke 5 of the sub-exciter 5. The second permanent magnet 6 is an alnico magnet and two magnets that are 24 mm thick, 12 mm wide, and 40 mm deep, as illustrated in Fig. 8(b), are interposed in the middle of the respective legs 9a of the yoke 9. The sub-exciter 5 had the same depth dimension as the central portion 8b of the yoke 8 of the main exciter 2. The yoke 9 of the sub-exciter is 82 mm high. Although the sub-exciter has the electromagnetic coil installed thereon, the yoke 9 can be low in height, as the number of turns of the conductive wire is relatively small.

The sub-exciter 5 has thereon the electromagnetic coil 7 disposed in such a way as to vary the magnetization direction of the second permanent magnets 6 and reverse the magnetic poles of the second permanent magnets. The electromagnetic coil 7 is disposed to cover the second permanent magnets 6. In the present example, a conductive wire with a diameter of 1.6 mm ($\phi$ 1.6 mm) is wound 800 times around each second permanent magnet to form the electromagnetic coil 7. The electromagnetic coil 7 has a power supply unit connected to the direct-current power supply and capable of controlling a current to a predetermined value.

The opening in the yoke 8 of the main exciter 2 is provided with the magnetic detectors. Eighty magnetic detectors, which are Hall elements, are arranged at intervals of 1 mm in the depth direction of the legs 8a of the yoke 8.

A normal operation (where excitation was on) was performed using the magnetic leakage inspection device configured as described above. As a result, in the center of the opening in the main exciter 2, uniform flux saturation state (1.7 T or more) was achieved in the depth direction of the legs 8a of the yoke 8. In the device described above, a reference current at which the magnetic force of the second permanent magnet 6 matched the magnetic force of the electromagnetic coil 7 was 3 A. Therefore, a current of 9 A, which was three times the reference current, was applied to the electromagnetic coil 7. After the current was applied for nine seconds and stopped, the magnetic flux density in the opening between the legs 8a of the yoke 8 was 0.1 T. Thus, by applying a current for a short period of time, the magnetic poles were reversed and the non-operating state (where excitation was off) was achieved. The resulting temperature rise in the exciter was less than 1°C, which was ignorable.

When the operation of the magnetic leakage inspection device of the present example was temporarily stopped (excitation was turned off) and a current of 9 A was applied for nine seconds to the electromagnetic coil 7 in the direction opposite that when the operation was stopped, the direction of the magnetic poles of the second permanent magnet 6 was restored and the normal operation (where excitation was on) was achieved.

Reference Signs List

    1: magnetic leakage inspection device

2: main exciter
3: first permanent magnet
4: magnetic detector
5: sub-exciter
6: second permanent magnet
7: electromagnetic coil
8, 9: yoke
8a, 9a: leg
8b, 9b: central portion
10: strip (inspection object)

**Claims**

1. A magnetic leakage inspection device (1) for inspecting an inspection object (10) by exciting the inspection object and detecting a magnetic flux leakage from the inspection object, the magnetic leakage inspection device (1) comprising:

   a gate-shaped main exciter (2) having an opening at a portion that faces the inspection object (10), the main exciter including at least one first permanent magnet (3);
   a magnetic detector (4) disposed in the opening in the main exciter (2);
   a sub-exciter (5) connected to the main exciter (2) to interpose the at least one first permanent magnet (3) of the main exciter, the sub-exciter (5) including a second permanent magnet (6) configured to magnetize the main exciter (2) in the same direction as the first permanent magnet (3); and
   an electromagnetic coil (7) configured to be capable of generating a magnetic flux by being supplied with a direct current, varying a magnetization direction of the second permanent magnet (6), and reversing magnetic poles of the second permanent magnet (6),
   wherein the main exciter (2) and the sub-exciter (5) each include a yoke (8, 9) for forming a magnetic path, and the first permanent magnet (3) and the second permanent magnet (6) are interposed in the respective yokes (8, 9).

2. The magnetic leakage inspection device (1) according to Claim 1, wherein the first permanent magnet (3) is a neodymium magnet.

3. The magnetic leakage inspection device (1) according to Claim 1 or Claim 2, wherein the second permanent magnet (6) is an alnico magnet or a samarium-cobalt magnet.

4. The magnetic leakage inspection device (1) according to any one of Claim 1 to Claim 3, wherein a cross-sectional area of the electromagnetic coil (7) is 200 mm$^2$ to 2000 mm$^2$, the cross-sectional area being calculated from a diameter and the number of turns of a conductive wire forming the electromagnetic coil.

5. A defect inspection method that inspects a strip (10) for defects by using the magnetic leakage inspection device (1) according to any one of Claim 1 to Claim 4, the strip (10) being conveyed as the inspection object, the defect inspection method comprising:

   during a defect inspection of the strip (10), stopping the current passed through the electromagnetic coil (7) to allow a magnetic flux from the first permanent magnet (3) to be supplied from the main exciter (2) to the inspection object (10); and when the defect inspection is not carried out, supplying a direct current to the electromagnetic coil (7) to generate a magnetic flux, reversing the magnetic poles of the second permanent magnet (6) with the magnetic flux to magnetize the sub-exciter (5) in a direction opposite to the main exciter (2), and confining the magnetic flux from the first permanent magnet (3) within the sub-exciter (5).

6. The defect inspection method according to Claim 5, wherein to resume the defect inspection after the defect inspection is stopped, a direct current is supplied to the electromagnetic coil (7) in a direction opposite a direction when the defect inspection is stopped, the magnetic poles of the second permanent magnet (6) are reversed again to restore the state before the defect inspection is stopped, and the sub-exciter (5) is magnetized in the same direction as the main exciter (2).

**Patentansprüche**

1. Vorrichtung zur magnetischen Leckprüfung (1) zum Prüfen eines Prüfobjekts (10) durch Erregen des Prüfobjekts und Detektieren eines magnetischen Flusslecks aus dem Prüfobjekt, wobei die Vorrichtung zur magnetischen Leckprüfung (1) Folgendes umfasst:

   einen torförmigen Haupterreger (2), der eine Öffnung an einem Abschnitt aufweist, der auf das Prüfobjekt (10) gerichtet ist, wobei der Haupterreger mindestens einen ersten Permanentmagneten (3) beinhaltet;
   einen magnetischen Detektor (4), der in der Öffnung in dem Haupterreger (2) angeordnet ist;
   einen Teilerreger (5), der mit dem Haupterreger (2) verbunden ist, um den mindestens einen ersten Permanentmagneten (3) des Haupterregers zwischenzuschalten, wobei der Teilerreger (5) einen zweiten Permanentmagneten (6) beinhaltet, der dazu konfiguriert ist, den Haupterreger (2) in der gleichen Richtung wie der erste Permanentmagnet (3) zu magnetisieren; und eine elektromagnetische Spule (7), die dazu konfiguriert ist, einen magnetischen Fluss erzeugen zu können, indem sie mit einem Gleichstrom zugeführt wird, eine Magnetisierungsrichtung des zweiten Permanentmagneten (6) variiert und die Magnetpole des zweiten Permanentmagneten (6) umkehrt, wobei der Haupterreger (2) und der Teilerreger (5) jeweils ein Joch (8, 9) zum Bilden eines magnetischen Pfades beinhalten und der erste Permanentmagnet (3) und der zweite Permanentmagnet (6) in den jeweiligen Jochen (8, 9) zwischengeschaltet sind.

2. Vorrichtung zur magnetischen Leckprüfung (1) nach Anspruch 1, wobei der erste Permanentmagnet (3) ein Neodym-Magnet ist.

3. Vorrichtung zur magnetischen Leckprüfung (1) nach Anspruch 1 oder Anspruch 2, wobei der zweite Permanentmagnet (6) ein Alnico-Magnet oder ein Samarium-Kobalt-Magnet ist.

4. Vorrichtung zur magnetischen Leckprüfung (1) nach einem der Ansprüche 1 bis 3, wobei eine Querschnittsfläche der elektromagnetischen Spule (7) 200 mm$^2$ bis 2000 mm$^2$ beträgt, wobei die Querschnittsfläche aus einem Durchmesser und der Anzahl von Windungen eines leitfähigen Drahtes berechnet wird, der die elektromagnetische Spule bildet.

5. Verfahren zur Defektprüfung, das ein Band (10) unter Verwendung der Vorrichtung zur magnetischen Leckprüfung (1) nach einem der Ansprüche 1 bis 4 auf Defekte prüft, wobei das Band (10) als Prüfobjekt gefördert wird, wobei das Verfahren zur Defektprüfung Folgendes umfasst:

während einer Defektprüfung des Bandes (10), Stoppen des durch die elektromagnetische Spule (7) verlaufenden Stroms, um zu erlauben, dass ein magnetischer Fluss von dem ersten Permanentmagneten (3) von dem Haupterreger (2) dem Prüfobjekt (10) zugeführt wird; und wenn die Defektprüfung nicht durchgeführt wird, Zuführen eines Gleichstroms zu der elektromagnetischen Spule (7), um einen magnetischen Fluss zu erzeugen, Umkehren der magnetischen Pole des zweiten Permanentmagneten (6) mit dem magnetischen Fluss, um den Teilerreger (5) in einer dem Haupterreger (2) gegenüberliegenden Richtung zu magnetisieren, und Eingrenzen des magnetischen Flusses vom ersten Permanentmagneten (3) innerhalb des Teilerregers (5).

6. Verfahren zur Defektprüfung nach Anspruch 5, wobei zum Wiederaufnehmen der Defektprüfung nachdem die Defektprüfung gestoppt wird, der elektromagnetischen Spule (7) ein Gleichstrom in einer Richtung zugeführt wird, die einer Richtung gegenüberliegt, in der die Defektprüfung gestoppt wird, die magnetischen Pole des zweiten Permanentmagneten (6) wieder umgekehrt werden, um den Zustand vor dem Stoppen der Defektprüfung wiederherzustellen, und der Teilerreger (5) in der gleichen Richtung wie der Haupterreger (2) magnetisiert wird.

## Revendications

1. Dispositif magnétique d'inspection de fuite (1) pour inspecter un objet d'inspection (10) en excitant l'objet d'inspection et en détectant une fuite de flux magnétique depuis l'objet d'inspection, le dispositif magnétique d'inspection de fuite (1) comprenant :

un excitateur principal en forme de grille (2) présentant une ouverture au niveau d'une partie qui fait face à l'objet d'inspection (10), l'excitateur principal incluant au moins un premier aimant permanent (3) ; un détecteur magnétique (4) disposé dans l'ouverture de l'excitateur principal (2) ; un sous-excitateur (5) raccordé à l'excitateur principal (2) pour interposer le au moins un premier aimant permanent (3) de l'excitateur principal, le sous-excitateur (5) incluant un second aimant permanent (6) configuré pour magnétiser l'excitateur principal (2) dans la même direction que le premier aimant permanent (3) ; et une bobine électromagnétique (7) configurée pour être capable de générer un flux magnétique en étant alimentée par un courant continu, en faisant varier une direction de magnétisation du second aimant permanent (6) et en inversant les pôles magnétiques du second aimant permanent (6), dans lequel l'excitateur principal (2) et le sous-excitateur (5) incluent chacun une culasse (8, 9) pour former un trajet magnétique, et le premier aimant permanent (3) et le second aimant permanent (6) sont interposés dans les culasses respectives (8, 9).

2. Dispositif magnétique d'inspection de fuite (1) selon la revendication 1, dans lequel le premier aimant permanent (3) est un aimant au néodyme.

3. Dispositif magnétique d'inspection de fuite (1) selon la revendication 1 ou la revendication 2, dans lequel le second aimant permanent (6) est un aimant Alnico ou un aimant au samarium-cobalt.

4. Dispositif magnétique d'inspection de fuite (1) selon l'une quelconque des revendications 1 à 3, dans lequel une section transversale de la bobine électromagnétique (7) est de 200 mm$^2$ à 2000 mm$^2$, la section transversale étant calculée à partir d'un diamètre et du nombre de tours d'un fil conducteur formant la bobine électromagnétique.

5. Procédé d'inspection de défaut qui inspecte une bande (10) à la recherche de défauts en utilisant le dispositif magnétique d'inspection de fuite (1) selon l'une quelconque des revendications 1 à 4, la bande (10) étant transportée en tant que l'objet d'inspection, le procédé d'inspection de défaut comprenant :

   lors d'une inspection de défaut de la bande (10), l'arrêt du courant traversant la bobine électromagnétique (7) pour permettre à un flux magnétique provenant du premier aimant permanent (3) d'être fourni depuis l'excitateur principal (2) à l'objet d'inspection (10) ; et
   lorsque l'inspection de défaut n'est pas effectuée, la fourniture d'un courant continu à la bobine électromagnétique (7) pour générer un flux magnétique, l'inversion des pôles magnétiques du second aimant permanent (6) avec le flux magnétique pour magnétiser le sous-excitateur (5) dans une direction opposée à l'excitateur principal (2), et le confinement du flux magnétique provenant du premier aimant permanent (3) à l'intérieur du sous-excitateur (5).

6. Procédé d'inspection de défaut selon la revendication 5, dans lequel, pour reprendre l'inspection de défaut après l'arrêt de l'inspection de défaut, un courant continu est fourni à la bobine électromagnétique (7) dans une direction opposée à une direction lorsque l'inspection de défaut est arrêtée, les pôles magnétiques du second aimant permanent (6) sont à nouveau inversés pour restaurer l'état avant l'arrêt de l'inspection de défaut, et le sous-excitateur (5) est magnétisé dans la même direction que l'excitateur principal (2).

# FIG. 1

# FIG. 2

# FIG. 3

## FIG. 4

# FIG. 5

# FIG. 6

MAGNETIC FLUX DENSITY (mT)

1702
1529
1356
1197
1029
851
678
505
346
173
0

(a) DISTRIBUTION OF MAGNETIC FLUX DENSITY

MAGNETIC FLUX (mWb)

6.446
5.206
3.967
2.727
1.487
0.248
-0.992
-2.231
-3.471
-4.710
-5.950

(b) DISTRIBUTION OF MAGNETIC FLUX (LINES OF MAGNETIC FORCE)

# FIG. 7

MAGNETIC FLUX DENSITY (mT)

1571
1411
1252
1104
945
785
626
466
319
160
0

(a) DISTRIBUTION OF MAGNETIC FLUX DENSITY

MAGNETIC FLUX (mWb)

0.158
-1.340
-2.838
-4.336
-5.834
-7.332
-8.831
-10.33
-11.83
-13.32
-14.82

(b) DISTRIBUTION OF MAGNETIC FLUX (LINES OF MAGNETIC FORCE)

# FIG. 8

(a)

(b)

(c)

# FIG. 9

**EP 4 047 360 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 56061645 A
- JP 2002195984 A
- JP 2002156363 A
- JP 2011007570 A